# EUROPÄISCHE PATENTSCHRIFT

(11) **EP 2 937 145 B1**
(45) Veröffentlichungstag und Bekanntmachung des Hinweises auf die Patenterteilung: **07.06.2017**
(21) Anmeldenummer: 14165715.5
(22) Anmeldetag: 24.04.2014
(51) Int. Cl.: B05B 7/14, B05C 11/10, B65G 53/42

(54) **Einrichtung zum Fördern eines feinteiligen Mediums**
Device for conveying a finely divided medium
Dispositif de transport d'un fluide à fines particules

(43) Veröffentlichungstag der Anmeldung: 28.10.2015
(73) Patentinhaber: Robatech AG, 5630 Muri (CH)
(72) Erfinder: Kurt Rey, 5623 Boswil (CH); Felix Hümbeli, 5630 Muri (CH); Christoph Käppeli, 5634 Merenschwand (CH)
(74) Vertreter: Quermann, Helmut

(56) Entgegenhaltungen:
- EP-A1- 0 962 258
- DE-A1- 4 021 674
- DE-A1- 4 315 327
- DE-A1-102005 016 352
- DE-C1- 4 407 684

## Beschreibung

Die Erfindung betrifft eine Einrichtung zum Fördern eines feinteiligen Mediums, nach dem Oberbegriff des Anspruchs 1. Einrichtungen zum Fördern eines feinteiligen Mediums, beispielsweise eines als Granulat oder in Pulverform vorliegenden Mediums, sind aus dem Stand der Technik hinlänglich bekannt.

Eine marktübliche Lieferform von Hotmelt für Verpackungsanwendungen ist Granulat. Dieses ist von einem Behälter einem Weiterverarbeitungsgerät, beispielsweise einer Schmelzeinheit, zuzuführen. Solche Art Granulate neigen dazu, sich in einem Lagerbehälter bzw. Zwischenlagerbehälter zu verkeilen, zu verblocken, Hohlräume zu bilden oder in Abhängigkeit ihrer chemischen Formulierung aneinander zu haften bzw. zu verkleben. Infolgedessen wird die weitere Zuführung des Granulats in ein angeschlossenes Weiterverarbeitungsgerät unterbrochen bzw. gestört.

Eine Einrichtung der eingangs genannten Art ist aus der
DE 20 2010 006 010 U1 bekannt. Diese weist eine innerhalb des flexiblen Behälters angeordnete Saugvorrichtung mit Vibrationseinheit auf. Die Vibrationseinheit besteht aus mehreren Schwingungselementen. Diese erzielen einen Auflockerungseffekt des vom Behälter aufgenommenen Mediums im Bereich der Vibrationseinheit. Gemäß einer ersten Variante ist die Vibrationseinheit nur in einem zentralen Bereich des Behälters angeordnet und deshalb kompakt sowie baulich relativ einfach gestaltet. Durch diese Ausbildung und Anordnung der Vibrationseinheit kann ein Verblocken des Mediums im Bereich der Seitenwände des Behältnisses nicht verhindert werden. Gemäß einer zweiten Variante ist vorgesehen, dass sich die Vibrationseinheit über den gesamten Querschnitt des Behälters erstreckt. Da die Vibrationseinheit bis zu den Seitenwänden des Behälters reicht, kann durch diese Gestaltung zwar ein Verblocken über den gesamten Querschnitt des Behälters erreicht werden. Allerdings ist der bauliche Aufwand für die Vibrationseinheit recht hoch. Wegen deren Größe weist die Vibrationseinheit zudem ein hohes Gewicht auf, sodass die Gesamtmasse der verfahrbaren Saugvorrichtung mit Vibrationseinheit recht hoch ist.

In der EP 2 612 817 A1 ist ein flexibler Behälter mit im Bereich des Bodens des Behälters angeordnetem Materialausgabetrichter bekannt. Der Trichter ist mit seitlichen Aufnahmevorrichtungen zum Übertragen einer außerhalb des Trichters erzeugten Vibration in das Innere des Behälters versehen. Das Material des Trichters ist so ausgewählt, dass eine Phasen- oder Amplitudenverschiebung zwischen innerer und äußerer Vibration erreicht wird, welche ein Verblocken/Anhaften des feinteiligen Mediums am Trichter verhindert.

In der EP 1 544 132 A2 ist ein Behälter zur Aufnahme von Pellets oder ähnlich großen Gegenständen beschrieben, wobei der Vorratsbehälter mit beweglichen, plattenförmigen Seitenwänden versehen ist. Durch mechanische Verstellung des Anstellwinkels der Seitenwände mittels Winde und der damit verbundenen Volumenverkleinerung des Vorratsbehälters wird die Materialzustellung in eine Austragvorrichtung, zum Beispiel eine Schnecke, sichergestellt. Bei Entleerung des Behälters vor der erneuten Befüllung muss mechanisch das Behältervolumen wieder durch Zurückstellen der Seitenwände vergrößert werden.

Aus der US 2 829 803 ist gleichfalls ein Behälter mit mechanisch verstellbaren Seitenwänden bekannt.

Eine Einrichtung, die die Merkmale des Oberbegriffs des Patentanspruchs 1 aufweist, ist aus der DE 40 21 674 A1 bekannt. Bei dieser nimmt ein stabiler Container einen flexiblen Behälter auf, der seinerseits der Aufnahme eines feinteiligen Mediums dient. Der flexible Behälter ist im Bereich eines oberen, umgeschlagenen Endes zwischen einem Containerunterteil und einem Containerdeckel geklemmt. Das Containerunterteil steht auf einer Vibrationsplatte, so dass deren Vibrationen über den Container auf den flexiblen Behälter übertragen werden, womit diese Vibrationsplatte auf den Behälter zwecks dessen Verformung einwirkt.

Weitere Einrichtungen zum Fördern eines Mediums, wobei bei diesen Einrichtungen gleichfalls keine Zerstörung des flexiblen Behälters erfolgt, sind aus den Druckschriften EP 0 962 258 A1, DE 43 15 327 A1 und DE 10 2005 016 352 A1 bekannt.

In der DE 44 07 684 C1 ist eine Vorrichtung zum Öffnen und dosierten Entleeren von Säcken beschrieben. Wesentlich ist hierbei, dass ein in einem Container angeordneter flexibler Behälter im Bereich einer unteren Behälterkante mittels rotierender Aufreißelemente aufgerissen wird und damit zerstört wird, so dass in diesem Bereich eine Öffnung im flexiblen Behälter erzeugt wird, durch die das feinteilige Medium einer diesem Bereich des Containers zugeordneten Absaugleitung zugeführt wird. Die Vorrichtung zum Öffnen und dosiertem Entleeren von Säcken kann durchaus auch mit Vibrationsunterstützung arbeiten. Insbesondere wird ein auf den Sack oder eine Stellfläche für den Sack wirkendes Vibrationselement vorgeschlagen.

Aufgabe der vorliegenden Erfindung ist es, eine Einrichtung der eingangs genannten Art derart weiterzubilden, dass ein störungsfreies automatisiertes Zuführen des feinteiligen Mediums gewährleistet ist, somit Zuführungsunterbrüche vermieden werden und das Medium in einem förderfähigen Zustande gehalten wird. Die Einrichtung soll zudem baulich besonders einfach gestaltet sein.

Gelöst wird die Aufgabe durch eine Einrichtung, die gemäß den Merkmalen des Patentanspruchs 1 ausgebildet ist.

Bei der erfindungsgemäßen Einrichtung ist wesentlich, dass das im flexible Behälter befindliche feinteilige Medium, insbesondere das im flexible Behälter befindliche Granulat, mittels der von oben in den flexiblen Behälter eingesetzten Saugvorrichtung nach oben aus dem flexiblen Behälter abgesaugt wird. Somit ergibt sich die Problematik, dass insbesondere das im unteren Bereich, somit im Bereich des Bodens, und im Bereich der Seitenwände des flexiblen Behälters befindliche Medium, aufgrund des Gewichts des im gefüllten flexiblen Behälter befindlichen Mediums, sich verkeilt, verblockt, Hohlräume bildet oder zudem, in Abhängigkeit von der chemischen Formulierung, aneinander haftet bzw. verklebt. Auch in diesem unteren Bereich des flexiblen Behälters und im Bereich dessen Seitenwänden ist sicherzustellen, dass der förderfähige Zustand des Mediums erhalten bleibt, um dieses mittels der Saugvorrichtung nach oben aus dem flexiblen Behälter absaugen zu können. Die Problematik stellt sich somit anders dar als diejenige bei einem Behälter, der im Bodenbereich eine Ausgabeöffnung für das Medium aufweist. Dadurch, dass gemäß der Erfindung die Vorrichtung zum Einwirken auf den flexiblen Behälter zwecks dessen Verformung außerhalb des flexiblen Behälters angeordnet ist und diese Vorrichtung im Bodenbereich oder dem seitlichen Bereich des flexiblen Behälters auf diesen einwirkt, lässt sich auf äußerst einfache Art und Weise und überdies mit minimalem Bauaufwand das feinteilige Medium im förderfähigen Zustand halten. Hierzu ist es nur erforderlich, in zeitlichen Abständen auf den flexiblen Behälter mittels der Vorrichtung einzuwirken, womit die Vorrichtung den Behälter verformt und damit auf das Medium einwirkt, sodass kein Verkeilen, Verblocken bzw. Haften/Verkleben erfolgen kann sowie keine Hohlräume innerhalb des Mediums entstehen.

Vorzugsweise weist die Vorrichtung zum Einwirken auf den flexiblen Behälter ein Mittel zum periodischen Einwirken auf den Behälter auf.

Vorzugsweise weist die Vorrichtung zum Einwirken auf den flexiblen Behälter ein Mittel zum schlagenden Einwirken auf diesen Behälter oder ein Mittel zum Bewegen des Bodens des Behälters auf. Insbesondere ist vorgesehen, dass das Mittel sich zusammen mit dem Boden des flexiblen Behälters hin und her bewegt. Die Bewegung erfolgt mit einer Beschleunigung, welche bewirkt, dass bei Erreichen eines oberen oder unteren Totpunktes des Mittels, abrupt das Materialgefüge des im flexiblen Behälters beinhalteten Mediums verändert wird.

Der flexible Behälter besteht insbesondere aus einem Gewebe, Stoff, Kunststoff oder einem sonstigen flexiblen Material. Wichtig ist hierbei, dass der Behälter flexibel ist, damit er sich bei Einwirken mittels der Vorrichtung verformt. Die Änderung der Form des Behälters führt dazu, dass sich das abgesetzte, verkeilte, verklebte, verblockte, schwer oder nicht mehr förderbare feinteilige Medium, insbesondere Granulat, wieder lockert. Vorzugsweise bewegt sich das Mittel zum Einwirken auf den flexiblen Behälter zusammen mit dem Boden des Behälters hin und her, womit die Positionsänderung des Mittels zum Einwirken auf den Behälter gleichzeitig zur Positionsänderung des Behälters in dessen Bodenbereich abläuft, da das Mittel und der Behälter in ständiger Berührung sind. Durch das abrupte Erreichen von entweder unterem oder oberem Totpunkt des Mittels wird das im flexiblen Behälter sich befindende Medium ebenfalls abrupt gestoppt und damit das Materialgefüge bzw. die Brückenbildung des Mediums verändert. Durch den auftretenden plötzlichen Massestopp von flexiblem Behälter und dem darin befindlichen Medium wird das Materialgefüge des Mediums dahingehend verändert, dass das Medium in einen rieselfähigen Zustand versetzt wird bzw. dieser erhalten bleibt. Anschließend wird mittels der Saugvorrichtung das Medium in aufwärts gerichteter Materialflussrichtung aus dem Behälter gefördert.

Gemäß einer bevorzugten Weiterbildung der Erfindung ist vorgesehen, dass die Vorrichtung zum Einwirken auf den flexiblen Behälter eine Hubeinheit und das von dieser hin und her verfahrbare, als Platte ausgebildete Mittel aufweist, wobei die Platte mit dem Boden des Behälters in Kontakt bringbar ist oder der Behälter auf der Platte aufliegt. Durch diese Ausbildung kann großflächig eine Stoßkraft auf den Behälter übertragen werden.

Erfindungsgemäß ist vorgesehen, dass die Vorrichtung zum Einwirken auf den Behälter unterhalb des flexiblen Behälters angeordnet ist. Hierdurch ergibt sich ein günstiger Kraftangriffspunkt der Vorrichtung zum Einwirken auf den Behälter, dahingehend, dass durch diese in vertikaler Richtung eine Stoßkraft auf den Behälter ausgeübt werden kann. Überdies ermöglicht die Anordnung der Vorrichtung zum Einwirken auf den Behälter unterhalb des Behälters eine kompakte Gesamtanordnung.

Der flexible Behälter ist im Bereich seines oberen Endes in der Aufnahme festgelegt. Der befestigte Behälter ist somit im Bereich seines oberen Endes fixiert, womit der Behälter, bei einer Einwirkung einer Kraft von unten auf den Boden, nicht insgesamt angehoben wird.

Gemäß der Erfindung ist vorgesehen, dass die Einrichtung zum Fördern des feinteiligen Mediums einen stabilen Container aufweist, der in seinem Inneren den Behälter aufnimmt. Der Container ist in Art eines oder als handelsüblicher Abfallbehälter mit Containerunterteil und schwenkbar in diesem gelagerten Containerdeckel ausgebildet. Ein solcher Abfallbehälter ist insbesondere ein in Haushalten Verwendung findender Abfallbehälter, der beispielsweise ein Fassungsvolumen von 240 Liter aufweist. In Art eines solchen Abfallbehälters weist der Container beispielsweise zwei Räder zum Verfahren des Containers in dessen leicht gekippter Stellung auf. Der Container ist im Wesentlichen quaderförmig gestaltet, mit oberer Öffnung und dem Containerdeckel zum Verschließen dieser Öffnung im Containerunterteil.

Erfindungsgemäß ist der Behälter im Bereich seines oberen Endes zwischen dem Containerunterteil und dem fest mit diesem verbundenen Containerdeckel geklemmt. Da der Container, konkret das Containerunterteil, mittels des Containerdeckels fest verschlossen ist, wird so ein Herausheben des flexiblen Behälters aus dem Container mittels der Vorrichtung zum Einwirken auf den Behälter bzw. der Hubeinheit verhindert. Somit bildet der Containerdeckel eine Art Anschlag bzw. einen fixen Punkt für den flexiblen Behälter, womit der Containerdeckel eine Formänderung des flexiblen Behälters im oberen Seitenbereich als Resultat der Hubbewegung erzwingt. Dieser Anschlag stellt die zuverlässig gewünschte Formänderung des Behälters sicher.

Erfindungsgemäß ist die Vorrichtung zum Einwirken auf den Behälter innerhalb des Containers, unterhalb des Behälters angeordnet. Somit lässt sich eine besonders kompakte Gestaltung von flexiblem Behälter und Vorrichtung zum Einwirken auf den Behälter im Zusammenhang mit dem diese Komponenten aufnehmenden Container erzielen.

Der flexible Behälter ist insgesamt oder teilweise, zumindest im Bereich von Seitenwandungen des Behälters, flexibel ausgebildet.

In einer Ausführungsvariante handelt es sich bei dem flexiblen Behälter bevorzugt um einen solchen, in dem das feinteilige Medium angeliefert wird.

Der Container besteht vorzugsweise aus Kunststoff oder Metall. Grundsätzlich können unterschiedliche Querschnittsformen von Container und/oder flexiblen Behälter Verwendung finden, beispielsweise eine runde oder ovale Querschnittsform.

Die Vorrichtung zum Einwirken auf den flexiblen Behälter bzw. die Hubeinheit kann auf unterschiedliche Art und Weise angetrieben werden, insbesondere pneumatisch, elektrisch, hydraulisch. Deren Bewegung kann vertikal sein, von unten, oder horizontal, von der Seite, somit seitliches Schlagen an den flexiblen Behälter. Von besonderem Vorteil ist ein Schüttelbewegung am flexiblen Behälter. Die Hubeinheit kann eine Hubplattenvorrichtung beinhalten, die aus mehreren Segmenten besteht, die gleichzeitig oder zeitversetzt sich heben und absenken. Die Platte der Hubeinheit und der Boden des flexiblen Behälters können sich permanent berühren oder weisen zumindest teilweise eine unterschiedliche Beschleunigung auf. Infolgedessen schlägt die Platte auf den Behälter bzw. es fällt der Behälter auf die Platte. Der Containerdeckel weist eine Öffnung auf, die eine Lanze der Saugvorrichtung durchsetzt. Da sich der Füllzustand des flexiblen Behälters
mit zunehmender Entleerung ändert, ist vorgesehen, dass die Saugvorrichtung dem Füllzustand des Behälters folgt. Unter diesem Aspekt durchsetzt die Saugvorrichtung bzw. die Lanze der Saugvorrichtung den Containerdeckel axial geführt. Diese Führung ermöglicht ein Bewegungsspiel der Saugvorrichtung bzw. der Sauglanze innerhalb eines definierten Bereichs und verhindert ein Hängenbleiben der Saugvorrichtung bzw. der Sauglanze am Containerdeckel. Ein solches Hängenbleiben würde dazu führen, dass die Saugvorrichtung bzw. die Sauglanze kein Medium ansaugen kann, weil die Saugvorrichtung bzw. die Sauglanze in der Luft hängt.

In den Figuren ist die Erfindung anhand eines bevorzugten Ausführungsbeispiels darstellt, ohne hierauf beschränkt zu sein. Es zeigt:
- Figur 1: einen vertikalen Schnitt durch eine Einrichtung zum Fördern eines feinteiligen Mediums, bei gefülltem flexiblem Behälter,
- Figur 2: einen Schaltplan zur Verdeutlichung der Ansteuerung der Vorrichtung zum Einwirken auf den Behälter und der Saugvorrichtung.

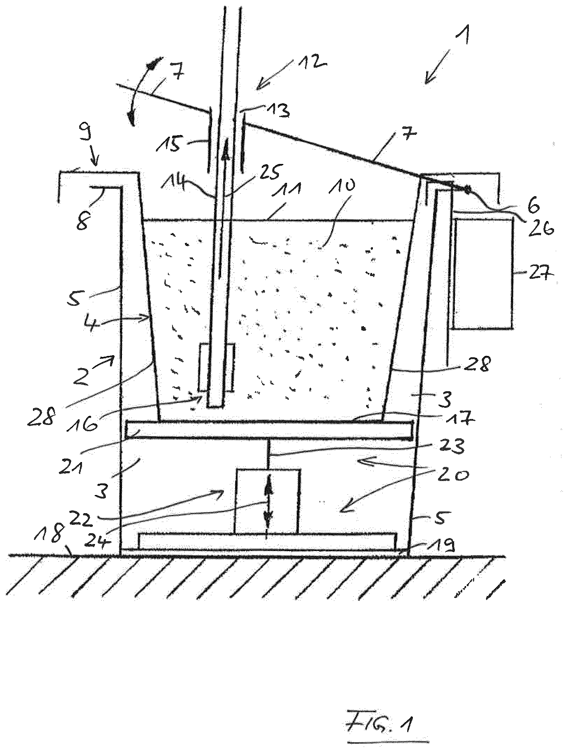

Die in Fig. 1 veranschaulichte Einrichtung zum Fördern des feinteiligen Mediums ist allgemein mit der Bezugsziffer 1 bezeichnet. Bei diesem feinteiligem Medium handelt es sich beispielsweise um ein Granulat, das einem Weiterverarbeitungsgerät, beispielsweise einer Schmelzeinheit zuzuführen ist. Die marktübliche Lieferform für Hotmelt für Verpackungsanwendungen ist Granulat.

Die Einrichtung 1 weist einen stabilen Container 2 auf, der in seinem Innenraum 3 ein gleichfalls Bestandteil der Einrichtung 1 bildenden flexiblen Behälter 4 aufnimmt. Der Container 2 ist in Art eines handelsüblichen Abfallbehälters mit einem Fassungsvolumen von 240 Liter ausgebildet und weist demzufolge ein Containerunterteil 5 und einen schwenkbar in diesem um eine Achse 6 gelagerten Containerdeckel 7 auf. Der Container 2 besteht aus Kunststoff und ist weitgehend dünnwandig ausgebildet. Der Innenquerschnitt des Containerunterteils 5, somit der Querschnitt des Innenraums 3, ist quadratisch.

Der flexible Behälter 4 besteht beispielsweise aus einem Gewebe und ist somit insgesamt flexibel. Im Bereich des oberen Endes ist der Behälter 4 aufgehängt. Insofern weist das Containeroberteil 5 im Bereich seines oberen Endes einen umlaufenden horizontalen Abschnitt 8 auf, über den der Behälter 4 mit seinem oberen, nach unten U-förmig gerichteten Rand 9 eingehängt ist. Aus Gründen der Klarheit ist der Rand 9 nicht auf dem Abschnitt 8 aufliegend, sondern in Abstand oberhalb diesem angeordnet veranschaulicht. In der Realität liegt der Behälter 4 im Bereich des U-förmigen Randes 9 auf dem Abschnitt 8 des Containerunterteils 5 auf.

Der flexible Behälter 4 ist mit dem feinteiligem Medium 10, vorliegend Granulat, gefüllt. Das Füllniveau des Granulats 10 ist mit der Bezugsziffer 11 veranschaulicht. Demnach ist der Behälter 4 nahezu vollständig gefüllt.

In den oben offenen flexiblen Behälter 4 ist von oben eine Saugvorrichtung 12 eingesetzt. Der Containerdeckel 7 weist eine Öffnung 13 auf, die eine Lanze 14 der Saugvorrichtung 12 durchsetzt, wobei diese Lanze 14 mittels einer im Containerdeckel 8 gelagerten Führung 15 axial geführt ist. Die Lanze 14, in deren Bereich eine Ansaugöffnung 16 für das Medium 10 angeordnet ist, ist soweit in den Behälter 4 eingesteckt, dass die Lanze 14 benachbart einem Boden 17 des Behälters 4 angeordnet ist.

Im Betrieb der Einrichtung 1 ist, entgegen der Darstellung in Fig. 1, der Containerdeckel 5 in seiner Schließstellung angeordnet, womit er waagerecht positioniert ist und auf dem Rand 9 des Containerunterteils 5 aufliegt. In dieser Stellung wird der Containerdeckel 7 am Containerunterteil 5 arretiert, sodass der Containerdeckel 7 nicht ungewollt geöffnet werden kann. Zwischen dem Containerdeckel 7 und dem Containerunterteil 5 ist der flexible Behälter 4 im Bereich seines Randes 9 geklemmt, somit festgelegt.

Der Container 2 ruht auf einem Untergrund bzw. einer Standfläche 18. Das Containerunterteil 5 seinerseits weist einen Boden 19 auf. Auf diesem ist eine Vorrichtung 20 zum Einwirken auf den Behälter 4 zwecks dessen Verformung angeordnet. Die Vorrichtung 20 kann am Boden 19 befestigt sein. Die Vorrichtung 20 weist ein als starre Platte ausgebildetes Mittel 21 zum Einwirken auf den Behälter 4 auf. Hierbei weist die Platte 21 einen Querschnitt parallel zum Boden 19 des Containerunterteil 5 auf, der geringfügig geringer ist als der Querschnitt des Containerunterteils 5. Die Vorrichtung 20 weist ferner eine im Boden 19 des Containerunterteils 5 gelagerte Hubeinheit 22 zum Heben und Senken der Platte 21 auf. Hierbei ist eine Hubstange 23 der Hubeinheit 22 mit der Platte 21 fest verbunden. Die Hubbewegungsrichtungen der Hubstange 23 und damit der Platte 21 sind durch den Doppelpfeil 24 veranschaulicht.

Der Pfeil 25 veranschaulicht die Förderrichtung des Mediums bzw. Granulats 10 durch die Lanze 14.

In das Containerunterteil 5 ist im Bereich des Abschnitts 8 eine Aufnahmevorrichtung 26 eingehängt, die der Lagerung einer Steuereinheit 27 dient.

Bei in den Container 2 eingesetztem flexiblem Behälter 4, insbesondere mit Medium bzw. Granulat 10 gefülltem Behälter 4, ruht der Boden 7 des Behälters 4 auf der Platte 21 der Vorrichtung 20 zum Einwirken auf den Behälter 4. Die Länge des flexiblen Behälters 4 in Fliessrichtung des Mediums ist dabei grösser als der Abstand zwischen Oberkante des Mittels 21 und dem Abschnitt 8. Wird die Platte 21 aus der in Fig. 1 veranschaulichten abgesenkten Stellung angehoben, führt dies zu einer Verformung des Behälters 4 im Bereich dessen Seitenwänden 28 und damit des vom Behälter 4 aufgenommenen Mediums bzw. Granulats 10. Sollte sich das Medium, das sich im Behälter 4 befindet, verkeilt oder verblockt haben oder in Abhängigkeit seiner chemischen Formulierung aneinander haften bzw. verkleben, kann durch mehrmaliges Heben und Senken der Platte 21 und damit mehrmaliges Einwirken der Platte 21 auf den Behälter 4, infolge dessen mehrmaligem veränderlichen Verformen des Behälters 4 dieses Verkeilen, Verblocken, Haften oder Verkleben aufgehoben werden, sodass das Medium bzw. Granulat 10 in förderfähigem Zustand mittels der Saugvorrichtung 12 aus dem Behälter 4 abgesaugt und einem Weiterverarbeitungsgerät störungsfrei automatisiert zugeführt werden kann.

Statt des direkten Kontakts von Platte 21 und flexiblen Behälter 4, womit sich der Boden 17 des Behälters 4 periodisch mit der Platte 21 bewegt, kann durchaus vorgesehen, dass die Hubeinheit 22 schräg von unten periodisch gegen den Behälter 4 schlägt. Grundsätzlich wird bei der Verformung des Behälters 4 wegen der Flexibilität des Behälters 4 aufgrund der Positionsänderung der Platte 21 zwischen deren unteren und oberen Hubstellung mindestens ein Teilbereich der Seitenwände 28 des flexiblen Behälters 4 mechanisch verformt. Die Änderung der Form des Behälters 4 führt dazu, dass sich das abgesetzte, verkeilte, verklebte, verblockte, schwer oder nicht mehr förderbare Granulat wieder lockert. Dieser gewünschte Effekt wird erzielt, indem die Hubeinheit sich in einer Ausführungsvariante schneller absenkt, als der flexible Behälter mit dem darin befindlichen Granulat 10 aufgrund der eigenen Masseträgheit in die unterste Position zurückfallen kann. Eine andere Ausführungsvariante beschreibt die Positionsänderung der Platte 21, welche gleichzeitig zur Positionsänderung des Bodens 17 des flexiblen Behälters 4 abläuft, da diese in ständiger Berührung sind. Durch das abrupte Erreichen von entweder unterem oder oberem Totpunkt wird das im Behälter 4 sich befindende Granulat 10 ebenfalls abrupt gestoppt und damit das Materialgefüge bzw. die Brückenbildung des Granulats 10 verändert. Durch den in beiden Fällen auftretenden plötzlichen Massestopp von Behälter 4 und dem darin befindlichen Granulat 10 wird das Materialgefüge des Granulats 10 bzw. des Schüttguts dahingehend verändert, dass das Granulat in einen rieselfähigen Zustand versetzt wird bzw. dieser erhalten bleibt. Anschließend wird mittels der Sauglanze 14 das Granulat 10 in aufwärts gerichteter Materialflussrichtung 25 aus dem Behälter 4 gefördert.

Da die vorrangig vertikale Bewegung der Platte 21 eine vorrangig vertikale Bewegung auf die Lanze 14 überträgt, ist am verschlossenen Containerdeckel 7 die Führung 15 für die Lanze 14 vorgesehen. Diese Führung 15 ermöglicht ein Bewegungsspiel innerhalb eines definierten Bereichs und verhindert ein Hängenbleiben der Lanze 14 unter anderem am Containerdeckel 7. Dies wiederum würde dazu führen, dass die Sauglanze 14 kein Granulat 10 ansaugen kann, weil der Ansaugteil der Sauglanze 14 in der Luft hängt. Da der Container 2 mittels des Containerdeckels 7 verschlossen ist, wird ein Herausheben des Behälters 4 aus dem Container 2 mittels der Hubeinheit 22 verhindert. Somit bildet der Containerdeckel 7 eine Art Anschlag bzw. fixen Punkt für den flexiblen Behälter 4, der eine Formänderung des flexiblen Behälters 4 im oberen Seitenbereich als Resultat der Hubbewegung erzwingt. Durch diesen Anschlag ist somit eine besonders zuverlässige, gewünschte Formänderung des Behälters 4 gewährleistet.

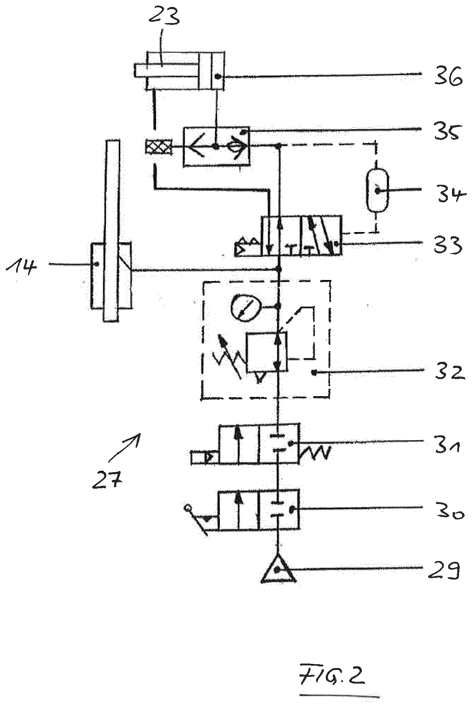

Eine Schaltanordnung zum im Wesentlichen pneumatischen Betreiben der Einrichtung 1 ist im Schaltplan gemäß Fig. 2 veranschaulicht.

Gezeigt ist eine Druckluftquelle 29 mit einem Druckniveau von beispielsweise 6 bar, ein 2/2-Wege-Handabsperrventil 30, ein 2/2-Wege-Elektromagnetventil 31, ein Druckregler mit Manometer 32, die Sauglanze 14, ein 5/2-Wege-Ventil 33 (mit Steuerluft), ein Drucktank 34, ein Schnellentlüftungsventil 35 sowie ein Pneumatik-Zylinder 36 der Hubeinheit 22, wobei die Kolbenstange des Pneumatik-Zylinders 36 die Hubstange 23 der Hubeinheit 22 bildet. Veranschaulicht ist, dass bei in Offenstellung befindlichen Ventilen 30 und 31 die Sauglanze 14 mit Druckluft zum Saugen und Fördern des Granulats 10 versorgt wird und in Abhängigkeit von der Schaltstellung des Ventils 33 der Pneumatik-Zylinder 36 derart beaufschlagt wird, dass die Hubstange 23 und damit die Platte 21 angehoben oder abgesenkt wird.

### Bezugszeichenliste

- 1: Einrichtung
- 2: Container
- 3: Innenraum
- 4: Flexibler Behälter
- 5: Containerunterteil
- 6: Achse
- 7: Containerdeckel
- 8: Abschnitt
- 9: Rand
- 10: Medium/Granulat
- 11: Füllniveau
- 12: Saugvorrichtung
- 13: Öffnung
- 14: Lanze
- 15: Führung
- 16: Ansaugöffnung
- 17: Boden des flexiblen Behälters
- 18: Untergrund / Standfläche
- 19: Containerboden
- 20: Vorrichtung
- 21: Mittel/Platte
- 22: Hubeinheit
- 23: Hubstange
- 24: Doppelpfeil
- 25: Pfeil
- 26: Aufnahmevorrichtung
- 27: Steuereinheit
- 28: Seitenwand
- 29: Druckluftquelle
- 30: 2/2-Wege-Handabsperrventil
- 31: 2/2-Wege-Elektromagnetventil
- 32: Druckregler mit Manometer
- 33: 5/2-Wege-Ventil
- 34: Drucktank
- 35: Schnellentlüftungsventil
- 36: Pneumatik-Zylinder

## Patentansprüche

1. Einrichtung (1) zum Fördern eines feinteiligen Mediums (10), insbesondere eines Granulats, mit einem flexiblen Behälter (4) zur Aufnahme des Mediums (10), einer Aufnahme (8) zum Befestigen des Behälters (4) im Bereich eines einem Boden (17) des Behälters (4) abgewandten oberen Endes (9), sowie einer in den Behälter (4) von oben eingesetzten Saugvorrichtung (12) zum Absaugen des Mediums (10) aus dem Behälter (4), wobei außerhalb des Behälters (4) in dessen Bodenbereich oder dessen seitlichem Bereich eine Vorrichtung (20) zum Einwirken auf den Behälter (4) zwecks dessen Verformung angeordnet ist, wobei die Einrichtung einen stabilen Container (2) aufweist, der in seinem Inneren den Behälter (4) aufnimmt, der Container (2) ein Containerunterteil (5) und einen in diesem gelagerten Containerdeckel (7) aufweist, wobei der Behälter (4) im Bereich seines oberen Endes (9) zwischen dem Containerunterteil (5) und dem Containerdeckel (7) geklemmt ist, wobei der Containerdeckel (7) eine Öffnung (13) aufweist, die eine Lanze (14) der Saugvorrichtung (12) durchsetzt, insbesondere axial geführt durchsetzt, **dadurch gekennzeichnet, dass** der Container (2) in Art eines oder als handelsüblicher Abfallbehälter mit Containerunterteil (5) und schwenkbar in diesem gelagerten Containerdeckel (7) ausgebildet ist und der Behälter (4) im Bereich seines oberen Endes (9) zwischen dem Containerunterteil (5) und dem fest mit diesem verbundenen Containerdeckel (7) geklemmt ist, sowie die Vorrichtung (20) zum Einwirken auf den Behälter (4) innerhalb des Containers (2), unterhalb des Behälters (4) angeordnet ist.

2. Einrichtung nach Anspruch 1, **dadurch gekennzeichnet, dass** die Vorrichtung (20) zum Einwirken auf den Behälter (4) ein Mittel (21) zum periodischen Einwirken auf den Behälter (4) aufweist.

3. Einrichtung nach Anspruch 1 oder 2, **dadurch gekennzeichnet, dass** die Vorrichtung (20) zum Einwirken auf den Behälter (4) ein Mittel (21) zum schlagenden Einwirken auf den Behälter (4) oder ein Mittel (21) zum Bewegen des Bodens (17) des Behälters (4) aufweist.

4. Einrichtung nach Anspruch 2 oder 3, **dadurch gekennzeichnet, dass** das Mittel (21) sich zusammen mit dem Boden (17) des Behälters (4) hin und her bewegt oder die Bewegung des Mittels (21) nach dem Einwirken auf den Behälter (4) vom Behälter (4) weg schneller erfolgt als das eigenständige Absenken des Bodens (17) des Behälters (4) aufgrund der auf diesen einwirkenden Gewichtskräfte.

5. Einrichtung nach einem der Ansprüche 2 bis 4, **dadurch gekennzeichnet, dass** die Vorrichtung (20) zum Einwirken auf den Behälter (4) eine Hubeinheit (22) und das von dieser verfahrbare, als Platte ausgebildete, hin und her verfahrbare Mittel (21) aufweist, wobei die Platte (21) mit dem Boden (17) des Behälters in Kontakt bringbar ist oder der Behälter (4) auf der Platte (21) aufliegt.

6. Einrichtung nach einem der Ansprüche 1 bis 5, **dadurch gekennzeichnet, dass** der Behälter (4) im Bereich seines oberen Endes (9) in oder an der Aufnahme (8) festgelegt ist.

7. Einrichtung nach einem der Ansprüche 1 bis 6, **dadurch gekennzeichnet, dass** der Behälter (4) insgesamt oder teilweise, zumindest im Bereich von Seitenwandungen (28) des Behälters (4), flexibel ausgebildet ist.

8. Einrichtung nach einem der Ansprüche 1 bis 7, **dadurch gekennzeichnet, dass** der Behälter (4) aus einem Gewebe, Stoff oder Kunststoff besteht.

9. Einrichtung nach einem der Ansprüche 1 bis 8, **dadurch gekennzeichnet, dass** die Vorrichtung (20) zum Einwirken auf den Behälter (4) pneumatisch oder elektrisch betreibbar ist.

## Claims

1. Device (1) for conveying a fine-particle medium (10), in particular a granulate, comprising a flexible receptacle (4) for receiving the medium (10), a receiving fixture (8) for fastening of the receptacle (4) in the region of an upper end (9) facing away from a base (17) of the receptacle, and a suction apparatus (12), inserted from above into the receptacle (4), for sucking the medium (10) out of the receptacle (4), wherein outside the receptacle (4), in its base region or its lateral region, is arranged an apparatus (20) for acting on the receptacle (4) for the purpose of its deformation, wherein the device has a stable container (2), which receives the receptacle (4) in its interior, the container (2) has a container bottom part (5) and a container lid (7) mounted in said bottom part, wherein the receptacle (4) is clamped, in the region of its upper end (9), between the container bottom part (5) and the container lid (7), wherein the container lid (7) has an opening (13) which passes, in particular axially guided, through a lance (14) of the suction apparatus (12), **characterized in that** the container (2) is configured in the style or form of a commercially available waste receptacle with container bottom part (5) and container lid (7) mounted pivotably in said bottom part and the receptacle (4) is clamped, in the region of its upper end (9), between the container bottom part (5) and the container lid (7) fixedly connected thereto, and also the apparatus (20) for acting on the receptacle (4) within the container (2) is disposed beneath the receptacle (4).

2. Device according to Claim 1, **characterized in that** the apparatus (20) for acting on the receptacle (4) has a means (21) for periodically acting on the receptacle (4).

3. Device according to Claim 1 or 2, **characterized in that** the apparatus (20) for acting on the receptacle (4) has a means (21) for acting percussively on the receptacle (4), or a means (21) for moving the base (17) of the receptacle (4).

4. Device according to Claim 2 or 3, **characterized in that** the means (21) moves back and forth together with the base (17) of the receptacle (4), or the movement of the means (21) away from the receptacle (4) after having acted on the receptacle (4) takes place faster than the independent lowering of the base (17) of the receptacle (4) due to the weight forces acting thereon.

5. Device according to one of Claims 2 to 4, **characterized in that** the apparatus (20) for acting on the receptacle (4) has a lifting unit (22) and the means (21) which is movable back and forth from this and is configured as a plate, wherein the plate (21) can be brought into contact with the base (17) of the receptacle or the receptacle (4) rests on the plate (21).

6. Device according to one of Claims 1 to 5, **characterized in that** the receptacle (4) is secured, in the region of its upper end (9), in or on the receiving fixture (8).

7. Device according to one of Claims 1 to 6, **characterized in that** the receptacle (4) is in total or in part, at least in the region of side walls (28) of the receptacle (4), flexibly configured.

8. Device according to one of Claims 1 to 7, **characterized in that** the receptacle (4) consists of a fabric, cloth or plastic.

9. Device according to one of Claims 1 to 8, **characterized in that** the apparatus (20) for acting on the receptacle (4) can be operated pneumatically or electrically.

## Revendications

1. Dispositif (1) pour le transport d'un fluide à fines particules (10), en particulier d'un granulat, avec un récipient flexible (4) destiné à contenir le fluide (10), un logement (8) pour la fixation du récipient (4) dans la région d'une extrémité supérieure (9) opposée à un fond (17) du récipient (4), ainsi qu'avec un dispositif d'aspiration (12) introduit par le haut dans le récipient (4) pour l'aspiration du fluide (10) hors du récipient (4), dans lequel un dispositif (20) est disposé à l'extérieur du récipient (4) dans la région de son fond ou de sa région latérale pour agir sur le récipient (4) en vue de sa déformation, dans lequel le dispositif présente un conteneur stable (2), qui contient le récipient (4) dans son espace intérieur, le conteneur (2) présente une partie inférieure de conteneur (5) et un couvercle de conteneur (7) monté dans celle-ci, dans lequel le récipient (4) est serré dans la région de son extrémité supérieure (9) entre la partie inférieure de conteneur (5) et le couvercle de conteneur (7), dans lequel le couvercle de conteneur (7) présente une ouverture (13), que traverse une lance (14) du dispositif d'aspiration (12), qu'elle traverse en particulier avec un guidage axial, **caractérisé en ce que** le conteneur (2) est réalisé à la manière ou sous la forme d'une poubelle disponible dans le commerce, avec une partie inférieure de conteneur (5) et avec un couvercle de conteneur (7) monté dans celle-ci de façon pivotante et le récipient (4) est serré dans la région de son extrémité supérieure (9) entre la partie inférieure de conteneur (5) et le couvercle de conteneur (7) relié de façon fixe à celle-ci, et le dispositif (20) destiné à agir sur le récipient (4) à l'intérieur du conteneur (2) est disposé en dessous du récipient (4).

2. Dispositif selon la revendication 1, **caractérisé en ce que** le dispositif (20) destiné à agir sur le récipient (4) présente un moyen (21) permettant d'agir périodiquement sur le récipient (4).

3. Dispositif selon la revendication 1 ou 2, **caractérisé en ce que** le dispositif (20) destiné à agir sur le récipient (4) présente un moyen (21) permettant d'agir par chocs sur le récipient (4) ou un moyen (21) permettant de déplacer le fond (17) du récipient (4).

4. Dispositif selon la revendication 2 ou 3, **caractérisé en ce que** le moyen (21) se déplace de façon réciproque de concert avec le fond (17) du récipient (4) ou le mouvement du moyen (21) s'écarte plus rapidement du récipient (4), après avoir agi sur le récipient (4), que la descente autonome du fond (17) du récipient (4) sous l'effet des forces de gravité agissant sur celui-ci.

5. Dispositif selon l'une quelconque des revendications 2 à 4, **caractérisé en ce que** le dispositif (20) destiné à agir sur le récipient (4) présente une unité de levage (22) et le moyen (21) déplaçable par celle-ci et de façon réciproque, réalisé sous forme de plaque, dans lequel la plaque (21) peut être mise en contact avec le fond du récipient ou le récipient (4) repose sur la plaque (21).

6. Dispositif selon l'une quelconque des revendications 1 à 5, **caractérisé en ce que** le récipient (4) est fixé dans ou sur le logement (8) dans la région de son extrémité supérieure (9).

7. Dispositif selon l'une quelconque des revendications 1 à 6, **caractérisé en ce que** le récipient (4) est réalisé sous forme flexible globalement ou partiellement, au moins dans la région des parois latérales (28) du récipient (4).

8. Dispositif selon l'une quelconque des revendications 1 à 7, **caractérisé en ce que** le récipient (4) se compose d'un tissu, d'une étoffe ou d'une matière plastique.

9. Dispositif selon l'une quelconque des revendications 1 à 8, **caractérisé en ce que** le dispositif (20) destiné à agir sur le récipient (4) peut être actionné par voie pneumatique ou électrique.
